# EUROPÄISCHE PATENTSCHRIFT

(11) **EP 0 368 040 B1**
(45) Veröffentlichungstag und Bekanntmachung des Hinweises auf die Patenterteilung: **10.02.1993**
(21) Anmeldenummer: 89119244.5
(22) Anmeldetag: 17.10.1989
(51) Int. Cl.: G01B 5/00

(54) **Taster für Koordinatenmessgeräte**
Probe for coordinate-measuring machines
Palpeur pour machine à mesurer les coordonnées

(30) Priorität: 05.11.1988 DE 8813875 U
(43) Veröffentlichungstag der Anmeldung: 16.05.1990
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Breyer, Karl-Hermann, Dr., D-7920 Heidenheim/Brenz (DE)

(56) Entgegenhaltungen:
- WO-A-87/01798
- DE-A- 2 234 146
- DE-A- 3 425 476
- DE-A- 3 620 118
- PATENT ABSTRACTS OF JAPAN, Band 10, Nr. 160 (P-465)[2216], 22. Juni 1986; & JP-A-61 17 011 (KOMATSU SEISAKUSHO K.K.) 25-01-1986

## Beschreibung

Die Erfindung betrifft einen Taster für Koordinatenmeßgeräte mit einer der auswechselbaren Befestigung des Tasters am Koordinatenmeßgerät dienenden Wechselfläche, die elektrische Kontakte aufweist. Ein solcher Taster ist beispielsweise aus der WO-A-87/01798 bekannt. Diese bekannten Taster enthalten Festwiderstände, die mit den Kontakten auf der Wechselfläche verbunden sind und über den Widerstandswert eine Identifizierung des an das Koordinatenmeßgerät angeschlossenen Tasters erlauben.

In jüngster Zeit werden Koordinatenmeßgeräte mehr und mehr im direkten Fertigungsbereich eingesetzt und beispielsweise mit den Bearbeitungsmaschinen eines flexiblen Fertigungssystems verkettet.

Im Fertigungsbereich ist es jedoch nicht möglich, Längenmessungen bei der Bezugstemperatur von 20°C durchzuführen. Messungen bei der bezugstemperatur lassen sich nur in besonders klimatisierten Meßräumen durchführen. Es ist daher schon vorgeschlagen worden, das gesamte Koordinatenmeßgerät im Fertigungsbereich mit einer klimatisierten Kabine zu kapseln. Dies erfordert jedoch einen erheblichen Aufwand und außerdem behindert die Kabine die Anlieferung der zu vermessenden Werkstücke.

Wenn außerhalb von klimatisierten Räumen oder Kabinen gemessen wird, dann müssen die Taster in relativ kurzen Zeitabständen immer wieder neu kalibriert werden. Denn schon geringe Abweichungen von der Bezugstemperatur, für die eine einmal durchgeführte Kalibrierung vorgenommen wurde, führen aufgrund der thermischen Längenausdehnung der Taster zu nicht tolerierbaren Meßfehlern. Ein Aluminiumtaster mit einer Länge von 100 mm dehnt sich beispielsweise bei einer Temperaturerhöhung von 1,1°C um 2,5 µm aus. Dieser Fehler kann die zulässige Meßunsicherheit des verwendeten Koordinatenmeßgerätes bereits übersteigen.

Da bei einem Meßvorgang für ein komplettes Werkstück in der Regel mehrere unterschiedliche Taster nacheinander eingewechselt werden und diese Taster entweder aus einem Ablageschrank oder einem am Rande des Meßbereiches aufgebauten Magazin entnommen werden, kann sich deren Temperatur zwischenzeitlich geändert haben. Entsprechend müßte nach jedem Tasterwechsel wieder neu kalibriert werden, um genaue Messungen zu erhalten. Dies verlangsamt den gesamten Meßablauf und ist insbesondere im Fertigungsbereich nachteilig, wo schnelle Meßergebnisse gefordert werden.

Die vorstehend genannten Schwierigkeiten lassen sich natürlich dadurch umgehen, daß man die Taster aus Materialien mit geringem Ausdehnungskoeffizienten wie z.B. Invar fertigt. Tastköpfe und Taststifte aus Invar sind jedoch in der Herstellung aufwendiger. Eine Umstellung der Taster auf dieses Material ist deshalb nicht ohne weiteres möglich.

In der DE-A1-34 25 476 ist eine Längenmeßvorrichtung beschrieben, bei der die Verschiebung des Fühlhebels durch ein Laserinterferometer gemessen wird. Die Längenmeßvorrichtung enthält außerdem eine Einrichtung zur Temperaturstabilisierung der Laserdiode bestehend aus einem Meßwiderstand und einem Peltier-Element. Die Temperatur des Fühlhebels selbst wird nicht gemessen.

Aus der DE-A1-36 20 118 ist ein Koordinatenmeßgerät bekannt, dessen Maßstäbe mit Temperatursensoren versehen sind. Diese Temperatursensoren sind fest mit dem Steuerrechner des Koordinatenmeßgerätes verdrahtet und erlauben die Korrektur von thermisch bedingten Längenänderung des Maßstabsmaterials.

In der DE-A1-22 34 146 ist eine Längenmeßeinrichtung beschrieben, die Temperaturführer zur Feststellung der Temperatur der Längenmeßeinrichtung enthält. Es ist jedoch nicht angegeben, an welchen Komponenten der Längenmeßeinrichtung die Temperatur gemessen wird.

Es ist die Aufgabe der vorliegenden Erfindung, Taster für Koordinatenmeßgeräte so auszubilden, daß der Einfluß der thermischen Längenänderung auf das Meßergebnis reduziert wird und ein dauerndes Nachkalibrieren nach einem Tasterwechsel bzw. bei Änderungen der Tastertemperatur vermieden werden kann.

Diese Aufgabe wird durch einen Taster mit den Merkmalen des Anspruchs 1 gelöst.

Bei den Tastern gemäß der vorliegenden Erfindung wird also eine thermische Längenausdehnung zugelassen und es erfolgt eine nachträgliche Korrektur der Meßergebnisse anhand der Temperaturwerte, die der im Taster integrierte Sensor über die Kontakte an der Wechselfläche an eine entsprechende Auswerteelektronik im Koordinatenmeßgeräte meldet. Dadurch ist es möglich, einmal vorkalibrierte Taststifte unter wechselnden Umgebungstemperaturen einzusetzen. Da die Sensoren ständig im thermischen Kontakt mit dem Taster sind, nehmen sie dessen Temperatur hochgenau an. Die Abfrage der Tastertemperatur kann deshalb ohne Zeitverzögerung in Bruchteilen einer Sekunde erfolgen.

Der Taster, dessen Temperatur erfaßt wird, kann entweder ein passiver starrer Taststift oder auch ein kompletter Tastkopf sein. Wesentlich ist lediglich, daß über die Temperaturmessung die Längenausdehung aller Bauteile zwischen der Wechselfläche und dem Tastelement, d.h. der Tastkugel erfaßt wird.

Wenn der Tastkopf und der Taststift aus einem Material mit guter Wärmeleitfähigkeit wie z.B. Stahl oder Aluminium bestehen, dann kann es ausreichend sein, den Sensor in den tellerformigen Halter einzusetzen, der mit der Wechselfläche versehen ist und zur Befestigung des Tastkopfs bzw. Taststifts dient. Denn aufgrund der Wärmeleitfähigkeit nimmt die komplette einzuwechselnde Einheit bestehend aus Halter, Tastkopf und Taststift dann die gleiche Temperatur an.

Der Taster kann jedoch auch ein berührungslos messender optischer Tastkopf sein. In Tastköpfen dieses Typs beeinflusst die Temperatur im Inneren des Gehäuses die relative Lage verschiedener Komponenten des Tastkopfes zueinander und damit die Genauigkeit der Abstandsmessung. Dort ist der Temperatursensor dann zweckmäßig in das Gehäuse des Tastkopfes eingesetzt.

Die Temperatursensoren können Meßwiderstände sein, die vorzugsweise in Vierleitertechnik angeschlossen werden. Mit solchen Sensoren werden bereits die Temperaturen anderer Komponenten eines Koordinatenmeßgerätes, wie z.B. die der Maßstäbe erfaßt. Der schaltungstechnische Aufwand läßt sich dann geringhalten, da die Temperaturen der verschiedenen Meßstellen (Maßstab, Werkstück, Taster) im Multiplex-Betrieb von einem Prozessor abgefragt und ausgewertet werden können.

Weitere Vorteile der Erfindung ergeben sich aus der nachfolgenden Beschreibung von Ausführungsbeispielen anhand der Figuren 1-3 der beigefügten Zeichnungen.
Figur 1 Zeigt einen auswechselbaren Taststift in der Seitenansicht;
Figur 2 zeigte einen auswechselbaren Tastkopf in der Ansicht auf die Wechselfläche;
Figur 3a ist eine perspektivische Darstellung des Gehäuses eines auswechselbaren optischen Tastkopfes;
Figur 3b ist eine Prinzipskizze, die wesentliche Komponenten im Innern des Tastkopfes aus Figur 3a zeigt.

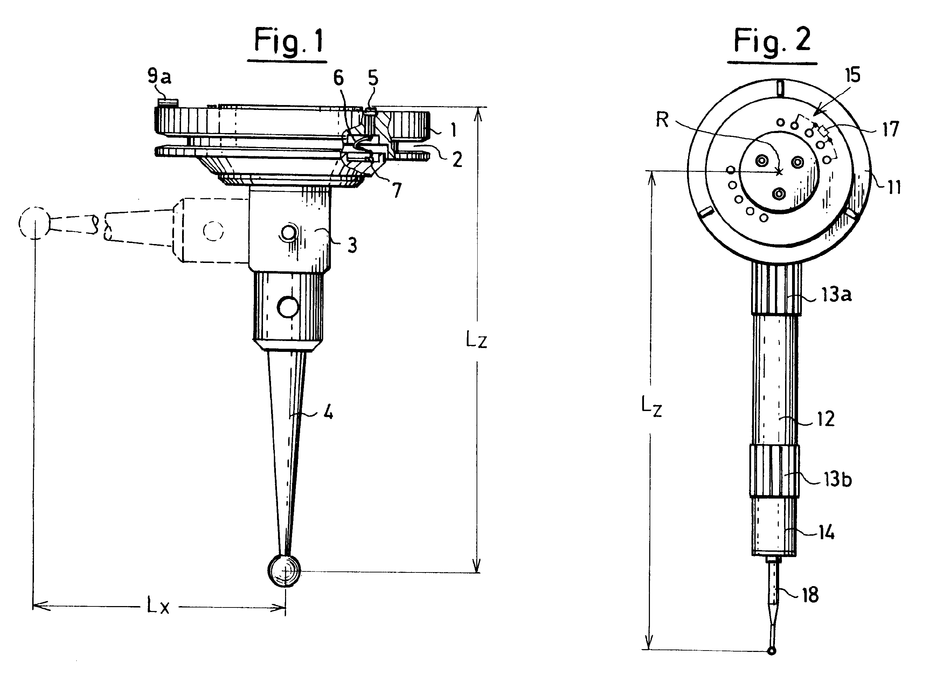

In Figur 1 ist ein Taststift dargestellt, der beispielsweise über die in der US-PS 46 37 119 beschriebene Wechseleinrichtung automatisch aus einem am Rande des Meßbereichs des betreffenden Koordinatenmeßgerätes aufgebauten Magazin aus eingewechselt werden kann. Dazu ist ein Wechselteller (1) vorgesehen, auf dessen Oberseite drei Zylinderkörper um 120° versetzt angeordnet sind. Mit diesen Zylinderkörpern, von denen in der Darstellung nach Figur 1 nur ein Zylinderkörper, der Zylinderkörper (9a) zu sehen ist, legt sich der Wechselteller (1) reproduzierbar an ein entsprechendes Gegenlager an der Unterseite des Tastkopfs am Koordinatenmeßgerät an.

Der Wechselteller (1) trägt an seiner Unterseite einen Montagewürfel (3), an den bis zu fünf Taststifte bzw. Taststiftkombinationen nach allen Seiten abstehend angeschraubt werden können. In der in Figur 1 gezeigten Darstellung ist an die Unterseite des Montagewürfels (3) ein Taststift (4) angesetzt.

Der tellerförmige Halter (1) ist außerdem mit einer umlaufenden Nut (2) versehen. In diese Nut greift ein gabelförmiger Träger des Magazins (nicht dargestellt) ein, in das der Taster abgelegt wird.

In der aufgebrochenen Darstellung erkennt man, daß in den tellerförmigen Halter (1) ein Sensor (7) in Form eines Platinwiderstandes eingesetzt ist. Dieser Sensor (7) befindet sich in gutem thermischen Kontakt mit dem Taststift (4) sowie den übrigen an den Montagewürfel (3) ansetzbaren Taststiften aufgrund der guten Wärmeleitfähigkeit des metallischen Materials, aus dem die Teile (1,3,4) hergestellt sind.

Die Enden des Meßwiderstandes (7) sind an Kontaktstifte (5) an der Oberseite des Wechseltellers (1) gelegt. Auf diese Weise wird die am Meßwiderstand abfallende Spannung an entsprechende Gegenkontakte im Tastkopf übertragen, und können von einer nachgeschalteten Meßelektronik ausgewertet werden.

Diese Meßelektronik ermittelt also nach jedem Tasterwechsel die Temperatur der eingewechselten Taststiftkombination und meldet diese an den Steuerrechner des Koordinatenmeßgerätes weiter. Dort wird aus der ermittelten Differenz zu der Temperatur, bei der die betreffende Taststiftkombination kallibriert worden ist, und unter Berücksichtigung der Taststiftlängen (LX bzw. LZ) sowie dem Ausdehnungskoeffizienten des Tastermaterials die zu korrigierende Längenausdehnung berechnet. Hierbei ist angenommen, daß sich die eingewechselte Taststiftkombination in allen Achsrichtungen linear ausdehnt und die Winkellage der Taststiftkombination durch den Wechselvorgang konstant reproduziert wird. Eine Neukalibrierung des Tasters ist deshalb nicht erforderlich.

Im Ausführungsbeispiel nach Figur 2 ist der komplette Tastkopf (14) mit dem darin nachgiebig gelagerten Taststift (18) über ein Verlängerungsstück (12) an dem tellerförmigen Halter (11) befestigt, der die Wechselfläche für ein automatisches Einwechseln an den Meßarm eines Koordinatenmeßgerätes trägt. Das Gehäuse des Tastkopfs (14), die Verlängerung (12) und der Wechselteller (11) sowie die die Teile miteinander verbindenden Überwurfmuttern (13a und 13b) bestehen aus Aluminium und befinden sich wegen der guten Wärmleitfähigkeit des Materials auf gleicher Temperatur. Ähnlich wie im Ausführungsbeispiel nach Figur 1 ist in den Wechselteller ein Temperatursensor (17) integriert, der in der Aufsicht nach Figur 2 allerdings nicht sichtbar ist. Auch der Temperatursensor (17) ist ein Meßwiderstand, der in Vierleitertechnik betrieben wird. Seine Anschlüsse sind dazu auf vier der in der Aufsicht nach Figur 2 sichtbaren Kontaktstifte (15) des Wechseltellers gelegt. Die Korrektur der thermischen Längenausdehnung erfolgt auch hier, indem die Entfernung (LZ) der Tastkugel am Taststift (18) von dem für die Korrektur in Betracht zu ziehenden Referenzpunkt (R) an der Wechselfläche mit dem thermischen Ausdehnungskoeffizienten und der Differenz zwischen der über den Meßwiderstand (17) gemessenen Temperatur und der Temperatur multipliziert wird, bei der diese Tasterkonfiguration kalibriert wurde.

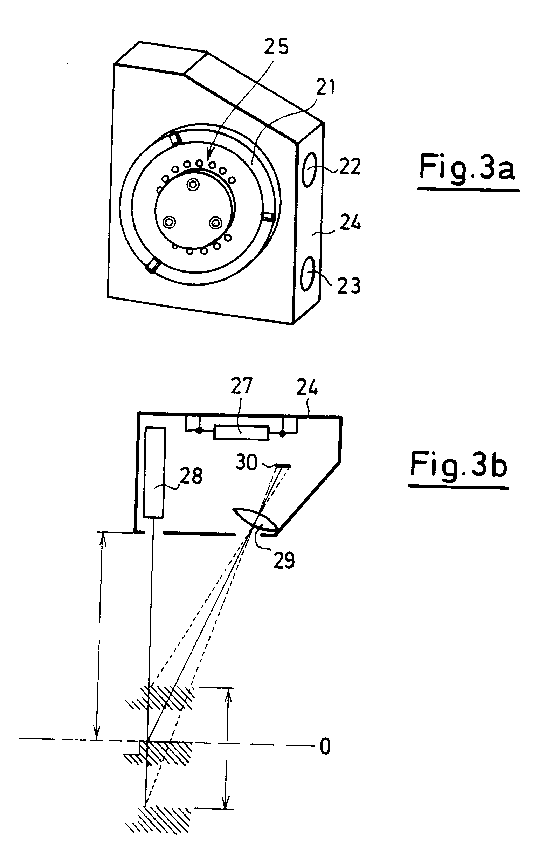

Im Ausführungsbeispiel nach Figur 3 ist ein gegen den mechanischen Taster aus Figur 2 austauschbarer optischer Tastkopf dargestellt. Hierbei handelt es sich um einen sogenannten Triangulationstaster, dessen Aufbau vereinfacht in Figur 3b skizziert ist. Er besitzt eine Laserdiode (28), von der ein Meßpunkt auf das zu vermessende Objekt projiziert wird, und eine Optik (29), die den projizierten Meßpunkt auf eine Diodenzeile (30) abbildet. Aus der Verschiebung des Meßpunktes auf der Diodenzeile wird der Abstand zum Objekt bestimmt.

Bei Tastern dieser Bauart spielt die lineare thermische Längenausdehnung bzw. der Abstand des Tastkopfes zu dem direkt an das Gehäuse (24) des Tasters angesetzten Wechselteller (21) nur eine untergeordnete Rolle. Hingegen können sich unter anderem auch durch die im Taster selbst entstehende Verlustwärme die gegenseitigen Justierungen der optoelektronischen Bauelemente zueinander ändern, was Fehler bei der Abstandsmessung zur Folge hat. Um das zu vermeiden ist im Gehäuse (24) ein Temperatursensor in Form eines Meßwiderstandes (27) untergebracht, dessen Anschlüsse auf vier der Kontakte (25) im Wechselteller (21) gelegt sind. Die temperaturabhängige Korrektur der Längenmeßwerte des Tasters (24) erfolgt hier so, daß z.B. die Drift des Nullpunktes des Meßbereiches für verschiedene Temperaturen gemessen und im Rechner des Koordinatenmeßgerätes in einer Speichertabelle abgelegt wird. Während des eigentlichen Meßprogrammes wird dann in regelmäßigen Abständen die an dem Meßwiderstand (27) abfallende Spannung und damit die aktuelle Temperatur des Triangulationstasters (24) abgefragt und die Abstandsmeßwerte um die in der Tabelle abgelegten Werten korrigiert.

## Patentansprüche

1. Taster für Koordinatenmeßgeräte, mit einer der auswechselbaren Befestigung des Tasters am Koordinatenmeßgerät dienenden Wechselfläche, die elektrische kontakte aufweist, dadurch gekennzeichnet, daß der Taster (4, 14, 24) einen im thermischen kontakt mit dem Tastermaterial stehenden Temperatursensor (7, 17, 27) enthält, die Anschlüsse des Sensors mit den elektrischen kontakten (5, 15, 25) verbunden sind und daß eine nachgeschaltete Meßelektronik vorgesehen ist, die so ausgebildet ist, daß sie nach jedem Tasterwechsel bzw. in regelmäßigen Abständen die Temperatur des Tasters zur nachträglichen Korrektur der Meßergebnisse anhand dieser Temperaturwerte ermittelt.

2. Taster nach Anspruch 1, dadurch gekennzeichnet, daß der Taster ein starrer mechanischer Taststift (4) ist.

3. Taster nach Anspruch 1, dadurch gekennzeichnet, daß der Taster ein kompletter Tastkopf (14,24) ist.

4. Taster nach einem der Ansprüche 1-3, dadurch gekennzeichnet, daß die Wechselfläche an einen tellerförmigen Halter (1,11) für den Taster angearbeitet ist, und daß der Temperatursensor (7,17) in den Halter eingesetzt ist.

5. Taster nach Anspruch 3 und 4, dadurch gekennzeichnet, daß der Tastkopf ein mechanischer Tastkopf (14) ist und mittelbar über ein Verlängerungsstück (12) an den mit der Wechselfläche versehenen Halter (11) angesetzt ist.

6. Taster nach Anspruch 3, dadurch gekennzeichnet, daß der Taster ein berührungslos messender optischer Tastkopf (24) ist und der Temperatursensor (27) in das Gehäuse des Tastkopfs (24) eingesetzt ist.

7. Taster nach einem der Ansprüche 1-6, dadurch gekennzeichnet, daß der Temperatursensor ein Messwiderstand (7,17,27) ist.

## Claims

1. A probe for coordinate measuring instruments comprising an exchange interface having electrical contacts for exchangeably mounting the probe on that coordinate measuring instrument, characterized by the fact that the probe (4, 14, 24) comprises a temperature sensor (7, 17, 27) having connecting electrical terminals and being mounted in thermal contact with the material of the probe, said electrical contacts (5, 15, 25) being connected to said connecting electrical terminals of said temperature sensor; and further characterized by a measurement electronic unit connected thereto and being so constructed as to determine the temperature of said probe at regular intervals after each probe exchange for later correcting the measurement results according to the temperature values.

2. The probe of claim 1, characterized by the fact that said probe is a rigid stylus (4).

3. The probe of claim 1, characterized by the fact that said probe is a complete probe head (14, 24).

4. The probe of one of claims 1 to 3, characterized by the fact that said exchange interface is on a plate shaped holder (1, 11) and that said temperture sensor (7, 17) is seated in said holder.

5. The probe of claims 3 and 4, characterized by the fact that said probe is a mechanical probe head (14) connected to said holder (11) having the exchange interface by an extension piece (12).

6. The probe of claim 3, characterized by the fact that said probe is a contactless measuring optical probe head (24), and that the temperature sensor (27) is mounted in the housing of the probe (24).

7. The probe of claim 6, characterized by the fact that said temperature sensor is a measuring resistor (7, 17, 27).

## Revendications

1. Palpeur pour des appareils de mesure de coordonnées, comportant une surface de commutation utilisée pour la fixation interchangeable du palpeur sur l'appareil de mesure de coordonnées et qui possède des contacts électriques, caractérisé en ce que le palpeur (4,14,24) contient un capteur de température (7,17,27), qui est en contact thermique avec le matériau du palpeur, que les bornes du capteur sont raccordées aux contacts électriques (5,15,25) et qu'il est prévu un système électronique de mesure branché en aval, qui est agencé de telle sorte qu'après chaque changement de palpeur à des intervalles réguliers, il détermine la température du palpeur pour l'exécution d'une correction ultérieure des résultats de mesure sur la base de ces valeurs de température.

2. Palpeur selon la revendication 1, caractérisé en ce que le palpeur possède une tige rigide de palpage mécanique (4).

3. Palpeur selon la revendication 1, caractérisé en ce que le palpeur est une tête de palpage complète (14,24).

4. Palpeur selon l'une des revendications 1-3, caractérisé en ce que la surface de commutation est formée sur un support en forme de disque (1,11) pour le palpeur, et que le capteur de température (7,17) est inséré dans le support.

5. Palpeur selon les revendications 3 et 4, caractérisé en ce que la tête de palpage est une tête de palpage mécanique (14) et est montée directement, par l'intermédiaire d'un prolongateur (12), sur le support (11) équipé de la surface de commutation.

6. Palpeur selon la revendication 3, caractérisé en ce que le palpeur est une tête de palpage optique (24) qui exécute une mesure sans contact, et que le capteur de température (27) est inséré dans le boîtier de la tête de palpage (24).

7. Palpeur selon l'une des revendications 1-6, caractérisé en ce que le capteur de température est une résistance de mesure (7,17,27).
